# EUROPEAN PATENT APPLICATION

(11) **EP 3 683 976 A1**
(43) Date of publication of application: **22.07.2020**
(21) Application number: 17924343.1
(22) Date of filing: 11.09.2017
(51) Int. Cl.: H04B 7/06, H04B 7/08, H04L 27/26, H04W 16/28, H04W 24/04

(54) **USER TERMINAL AND RADIO COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); NA, Chongning, Beijing 100190 (CN); LIU, Min, Beijing 100190 (CN)
(74) Representative: Hoffmann Eitle
(86) International application number: PCT/JP2017/032688
(87) International publication number: WO 2019/049369

(57) **Abstract**

The present disclosure is designed to properly control RLM when beam recovery procedures are expected to be executed. In accordance with one aspect of the present invention, a user terminal has a receiving section that receives information about a hypothetical downlink control channel, and a control section that controls, based on the information, monitoring of radio link quality of a downlink signal in a first set, which is assumed to be quasi-co-located (in QCL) with a demodulation reference signal for a downlink control channel, and/or radio link quality of a downlink signal in a second set, which is configured by a radio base station.

## Description

### Technical Field

The present disclosure relates to a user terminal and a radio communication method in next-generation mobile communication systems.

### Background Art

In the Universal Mobile Telecommunications System (UMTS) network, the specifications of long-term evolution (LTE) have been drafted for the purpose of further increasing high speed data rates, providing lower latency and so on (see non-patent literature 1). In addition, the specifications of LTE-Advanced (LTE-A and LTE Rel. 10, 11, 12 and 13) have also been drafted for the purpose of achieving increased capacity and enhancement beyond LTE (LTE Rel. 8 and 9).

Successor systems of LTE are also under study (for example, referred to as "Future Radio Access (FRA)," "5th Generation mobile communication system (5G)," "5G+ (plus)," "New Radio (NR)," "New radio access (NX)," "Future generation radio access (FX)," "LTE Rel. 14, 15 and later versions," etc.).

In existing LTE systems (LTE Rel. 8 to 13), the quality of radio links is subject to monitoring (Radio Link Monitoring (RLM)). When a radio link failure (RLF) is detected based on RLM, a user terminal (User Equipment (UE)) is required to re-establish an Radio Resource Control (RRC) connection.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Furthermore, future radio communication systems (for example, LTE Rel. 14 or later versions, NR, 5G, etc.) are under study to allow communication using beamforming (BF). Also, in order to prevent radio link failures (RLFs) from occurring, studies are underway to perform procedures for switching to other beams (also referred to as "beam recovery (BR)") when the quality of a particular beam deteriorates.

Therefore, if a method like that used in existing LTE systems (LTE Rel. 8 to 13), where there is no expectation of execution of beam recovery procedures, is used in such future radio communication systems, there is a possibility that radio link monitoring (RLM) cannot be controlled properly.

The present invention has been made in view of the above, and it is therefore an object of the present invention to provide a user terminal and a radio communication method, whereby RLM can be controlled properly when beam recovery procedures are expected to be executed.

### Solution to Problem

In accordance with one aspect of the present disclosure, a user terminal has a receiving section that receives information about a hypothetical downlink control channel, and a control section that controls, based on the information, monitoring of radio link quality of a downlink signal in a first set, which is assumed to be quasi-co-located (in QCL) with a demodulation reference signal for a downlink control channel, and/or radio link quality of a downlink signal in a second set, which is configured by a radio base station.

### Advantageous Effects of Invention

According to one example of the present disclosure, RLM can be controlled properly when beam recovery procedures are expected to be executed.

### Brief Description of Drawings

FIG. 1 is a schematic diagram, in which RLF is detected based on IS/OOS;
FIG. 2 is a diagram to show an example of beam recovery procedures;
FIG. 3 is a diagram to show examples of an active set and a candidate set according to a first example of the present disclosure;
FIGs. 4 are flowcharts to show examples of beam failure detection according to a second example of the present disclosure;
FIGs. 5 are flowcharts to show examples of new candidate beam detection according to the second example;
FIG. 6 is a diagram to show an exemplary schematic structure of a radio communication system according to the present embodiment;
FIG. 7 is a diagram to show an exemplary overall structure of a radio base station according to the present embodiment;
FIG. 8 is a diagram to show an exemplary functional structure of a radio base station according to the present embodiment;
FIG. 9 is a diagram to show an exemplary overall structure of a user terminal according to the present embodiment;
FIG. 10 is a diagram to show an exemplary functional structure of a user terminal according to the present embodiment; and
FIG. 11 is a diagram to show an exemplary hardware structure of a radio base station and a user terminal according to the present embodiment.

### Description of Embodiments

Future radio communication systems (for example, LTE Rel. 14 or later versions, NR, 5G, etc.) are under study to allow communication using beamforming (BF).

For example, beams that are used by a user terminal and/or a radio base station (for example, a gNodeB (gNB)) may include beams that are used to transmit signals (also referred to as "transmitting beams," "Tx beams," etc.), and beams that are used to receive signals (also referred to as "receiving beams," "Rx beams," etc.). A pair of a transmitting beam of the transmitting end and a receiving beam of the receiving end may be referred to as a "beam pair link (BPL)."

To select a BPL, the base station and the user terminal may autonomously select beams that are suitable for both, or may exchange information that can identify combinations that are suitable for both, via RRC, MAC CE, L1 signaling, etc., and select beams based on this information. Also, between different BPLs, either transmission or receipt, or both, may use different antenna devices for transmission and receipt (for example, antenna panels, antenna element sets, transmitting/receiving points (also referred to as "Transmission and Reception Points (TRPs)," "Transmitter and Reception Points (TxRPs)," "Transmission and Receiver Points (TRxPs)," etc.), and so forth). In this case, between different BPLs, quasi-co-location (QCL), which shows channels' statistical properties, also varies. Consequently, QCL may be the same or different between different BPLs, and information as to whether QCL is the same or different may be identified by the transmitter/receiver, based on signaling or measurements.

In an environment in which BF is used, blockage due to obstacles has more impact, and therefore the quality of a radio link might deteriorate. There is a danger that, if the quality of a radio link deteriorates, radio link failures (RLFs) might occur frequently. When an RLF occurs, it is necessary to re-connect with cells, and, if RLFs occur frequently, this may lead to a decline in system throughput.

For this reason, the method of radio link monitoring (RLM) for future radio communication systems is being discussed. For example, envisaging future radio communication systems, research is underway to support one or more downlink signals for RLM (also referred to as "DL-RSs (Reference Signals)" or the like).

Resources for the DL-RSs (DL-RS resources) may be associated with resources and/or ports for synchronization signal blocks (SSBs) or channel state measurement RSs (Channel State Information RSs (CSI-RSs)). Note that SSBs may be referred to as "SS/PBCH (Physical Broadcast CHannel) blocks" and the like.

The DL-RSs may include at least one of the primary synchronization signal (PSS), secondary synchronization signal (SSS), mobility reference signal (MRS), CSI-RS, demodulation reference signal (DMRS), beam-specific signal and so forth, or may be signals that are formed by enhancing and/or modifying these signals (for example, signals formed by changing the density and/or the cycle of the above signals).

A user terminal may be configured, by higher layer signaling, to perform measurements using DL-RS resources. The assumption here is that the user terminal, configured to perform such measurements, determines whether a radio link is in a synchronous state (In-Sync (IS)) or in an asynchronous state (Out-Of-Sync (OOS)) based on measurement results in DL-RS resources. Default DL-RS resources where the user terminal may conduct RLM in case no DL-RS resource is configured from the radio base station may be set forth in the specification.

If the quality of a radio link estimated (or "measured") based at least on one of the DL-RS resources configured exceeds a given threshold Qin, the user terminal may judge that the radio link is in IS ("In-Sync").

If the quality of a radio link estimated based at least on one of the DL-RS resources configured falls below a given threshold Qₒᵤₜ, the user terminal may judge that the radio link is in OOS ("Out-Of-Sync"). Note that the radio link quality here may correspond to, for example, the block error rate (BLER) of a hypothetical PDCCH.

According to existing LTE systems (LTE Rel. 8 to 13), IS and/or OOS (IS/OOS) are indicated from the physical layer to higher layers (for example, the MAC layer, the RRC layer, etc.) to the user terminal, and RLF is detected based on the indications of IS/OOS.

To be more specific, when the user terminal receives an OOS indication pertaining to a given cell (for example, the primary cell) N310 times, the user terminal will activate (start) a timer T310. When the user terminal receives an IS indication pertaining to that given cell N311 times while the timer T310 is running, the user terminal will stop the timer T310. When the timer T310 expires, the user terminal judges that RLF has been detected with respect to that given cell.

Note that the labeling "N310," "N311," "T310" and others are by no means limiting. T310 may be referred to as the "timer for RLF detection" or the like. N310 may be interpreted as the number of times OOS is indicated, needed to activate the timer T310, or the like. N311 may be interpreted as the number of times IS is indicated, needed to stop the timer T310, or the like.

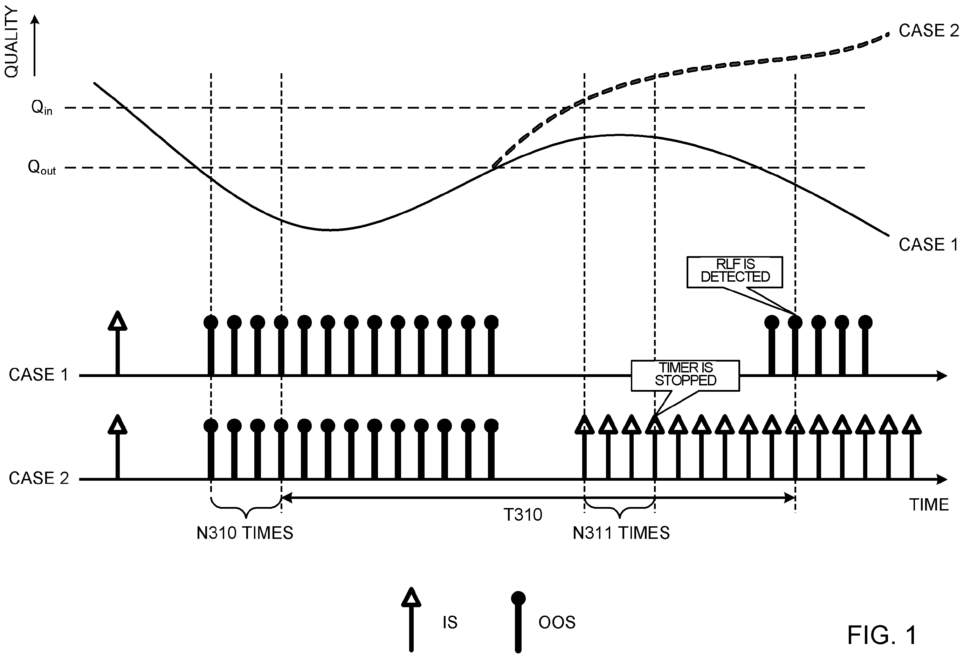

FIG. 1 is a schematic diagram, in which RLF is detected based on IS/OOS. This drawing assumes that N310=N311=4. T310 shows the period from the activation of the timer T310 to its expiration, but does not show the timer's counter.

The upper part of FIG. 1 shows two cases (case 1 and case 2) in which the estimated quality of a radio link changes. The lower part of FIG. 1 shows IS/OOS indications that correspond to the above two cases.

In case 1, first, OOS occurs N310 times, and so the timer T310 is started. After that, the timer T310 expires while the radio link quality does not exceed threshold Qin, and so RLF is detected.

Referring to case 2, although the timer T310 starts as in case 1, following this, the radio link quality exceeds threshold Qin and IS occurs N311 times, and so the timer T310 stops.

Now, envisaging future radio communication systems (for example, LTE Rel. 14 or later versions, NR, 5G, etc.), research is underway to execute procedures for switching to other beams (which may be referred to as "beam recovery (BR)," "L1/L2 beam recovery," etc.), when the quality of a particular beam deteriorates, so as to prevent RLF from occurring. Although, as mentioned earlier, RLF is detected by controlling RS measurements in the physical layer and by controlling the activation and expiration of timers in higher layers, and the recovery from RLF should follow the same procedures as random access, there is an expectation that the procedures for switching to other beams (BR and L1/L2 beam recovery) will be made simpler than the recovery from RLF, at least in part of the layers.

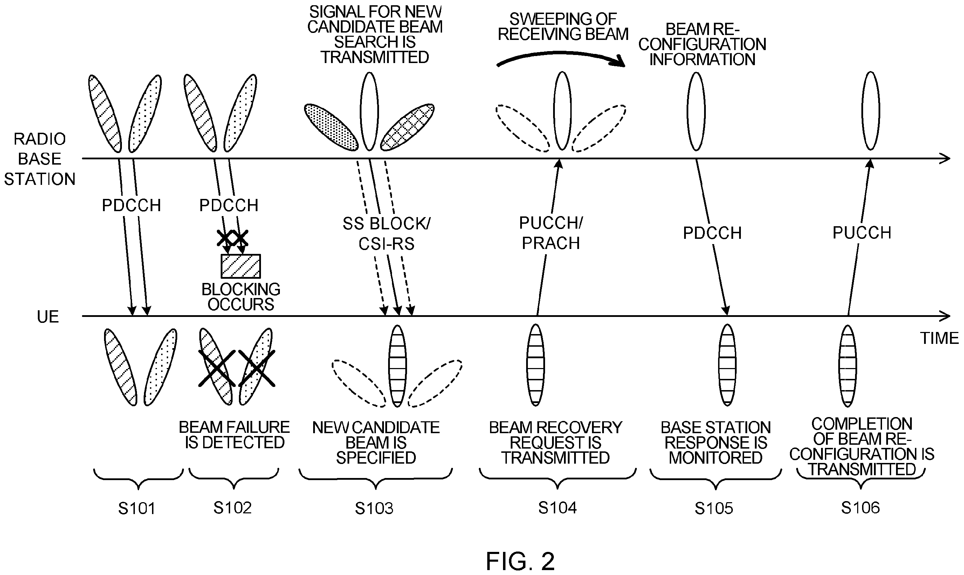

FIGs. 2 are diagrams to show examples of beam recovery procedures. The number of beams and the like are examples, and not limiting. In the initial state (step S101) shown in FIG. 2, a user terminal receives a downlink control channel (Physical Downlink Control CHannel (PDCCH)) that is transmitted from a radio base station by using two beams.

In step S102, the radio waves from the radio base station are blocked, and therefore the user terminal is unable to detect the PDCCH. Such blocking might occur due to, for example, the impacts of obstacles between the user terminal and the radio base station, fading, interference, and so forth.

The user terminal detects beam failures when given conditions are met. The radio base station may judge that the user terminal has detected a beam failure when no report arrives from the user terminal, or the radio base station may judge that the user terminal has detected a beam failure when receiving a given signal (the beam recovery request in step S104) from the user terminal.

In step S103, the user terminal starts a search for new candidate beams, to use newly for communication, for beam recovery. To be more specific, upon detecting a beam failure, the user terminal performs measurements based on preconfigured DL-RS resources, and identifies one or more new candidate beams that are desirable (that have good quality, for example). In this example, one beam is identified as a new candidate beam.

In step S104, the user terminal, having identified a new candidate beam, transmits a beam recovery request (beam recovery request signal). The beam recovery request may be transmitted, by using, for example, at least one of an uplink control channel (Physical Uplink Control CHannel (PUCCH)), a random access channel (Physical Random Access CHannel (PRACH)), and a UL grant-free Physical Uplink Shared CHannel (PUSCH).

The beam recovery request may include information about the new candidate beam identified in step S103. The resource for the beam recovery request may be associated with the new candidate beam. The information about the beam may be reported by using, for example, a beam index (BI), a given reference signal's port and/or resource index (for example, a CSI-RS resource indicator (CRI)), and so forth.

In step S105, the radio base station, having detected the beam recovery request, transmits a response signal in response to the beam recovery request from the user terminal. This response signal may contain reconfiguration information (for example, configuration information of DL-RS resources) related to one or more beams. The response signal may be transmitted, for example, in a user terminal-common search space in the PDCCH. The user terminal may select the transmitting beams and/or the receiving beams to use based on the beam reconfiguration information.

In step S106, the user terminal may transmit, to the radio base station, a message to the effect that beam reconfiguration has been completed. This message may be transmitted by using the PUCCH, for example.

A successful beam recovery (BR success) may refer to, for example, the case of arriving at step S106. On the other hand, a beam recovery failure (BR failure) may refer to, for example, the case where no candidate beam can be identified in step S103.

For example, in a multi-beam operation scenario, the user terminal might be configured to perform both RLM for beams and beam recovery. However, if radio link monitoring (RLM) is performed in such future radio communication systems based on a method like that used in existing LTE systems (LTE Rel. 8 to 13) where there is no expectation of execution of beam recovery procedures, there is a possibility that IS and OOS, which have been described earlier, cannot be judged properly, and, as a result of this, RLF cannot be detected properly.

So, the present inventors have come up with the idea of properly detecting beam failures and/or detecting new candidate beams in beam recovery procedures by properly controlling a threshold Qin, which is used to judge IS, and/or a threshold Qₒᵤₜ, which is used to judge OOS, in the RLM of beams.

Now, embodiments of the present disclosure will be described below in detail with reference to the accompanying drawings.

### (First Example)

With the first example of the present disclosure now, assumptions that are held with respect to the PDCCH in the RLM for detecting beam failures and/or in the RLM for detecting new candidate beams will be described.

The RLM for detecting beam failures is performed based on, for example, the radio link quality of a DL-RS resource in the first set that is assumed to be quasi-co-located (or assumed to be in "Quasi-Co-Location (QCL)") with the demodulation reference signal (DMRS) for a downlink control channel (PDCCH). Information to indicate this DL-RS resource of the first set may be reported from a radio base station to a user terminal by using higher layer signaling and/or physical layer signaling (for example, DCI).

Here, when quasi-co-location (QCL) holds, it is possible to assume that a number of different signals share at least one of the space, the average gain, the delay and the doppler parameter in common. For example, when a DL-RS resource in the first set is assumed to be quasi-co-located (in QCL) with the DMRS for a PDCCH, it is possible to assume that the DL-RS resource is transmitted using the same beam (antenna port) as that of the PDCCH. Here, the first set may be also seen as a set of beams that can be used to transmit the PDCCH, and may be referred to as an "active set" or the like.

Meanwhile, the RLM for detecting new candidate beams is performed based on, for example, the radio link quality of a DL-RS resource in a second set that is indicated by the radio base station. Information to indicate this DL-RS resource of the second set may be reported from the radio base station to the user terminal by using higher layer signaling and/or physical layer signaling (for example, DCI).

The DL-RS resource of the second set can also be seen as a DL-RS resource to be transmitted using the same beam (antenna port) as a beam that serves as a candidate to switch to (candidate beam) when a beam failure is detected. The second set can also be seen as a set of candidate beams, and may be also referred to as a "candidate set," a "non-active set," a "backup beam set," and so forth. The DL-RS resource of the second set needs not be assumed to be quasi-co-located (in QCL) with the DL-RS resource of the first set or the DMRS for the PDCCH. Furthermore, if there are multiple DL-RS resources in the second set, QCL may not be assumed between these DL-RS resources. The user terminal may identify information concerning QCL with respect to the DL-RS resources of the second set based on higher layer or physical layer signaling from the base station.

Note that the DL-RS resources in the active set and the DL-RS resources in the candidate set may be CSI-RS resources and/or SS/PBCH blocks, respectively. CSI-RS resources may be identified by CSI-RS resource indicators (CRIs), and SS/PBCH blocks may be identified by time-direction indices (SS/PBCH indices).

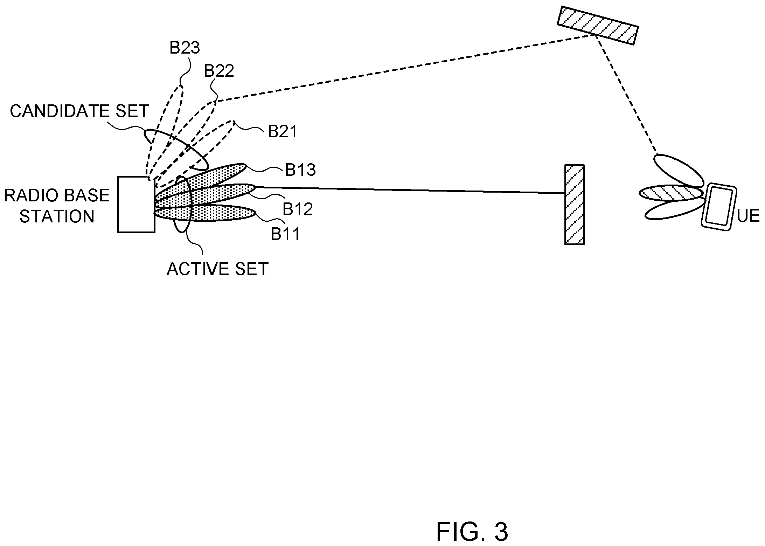

FIG. 3 is a diagram to show examples of the active set and the candidate set according to the first example of the present disclosure. Referring to FIG. 3, one beam in the active set is blocked by an obstacle, and therefore the user terminal cannot detect the PDCCH transmitted using this beam.

The user terminal estimates the radio link quality associated with the DL-RS resources of the active set. The user terminal may compare the estimated radio link quality against a threshold Q_{out_1}, which is used to judge OOS (the first threshold), and/or a threshold Q_{in_1}, which is used to judge IS (the second threshold).

Also, the user terminal estimates the radio link quality associated with the DL-RS resources of the candidate set. The user terminal may compare the estimated radio link quality against a threshold Q_{out_2}, which is used to judge OOS (the third threshold), and/or a threshold Q_{in_2}, which is used to judge IS (the fourth threshold).

Next, thresholds Q_{out_1} and Q_{in_1}, used in the RLM for the active set, and thresholds Q_{out_2} and Q_{in_2}, used in the RLM for the candidate set, will be explained in detail below.

### <Threshold Q_{out_1}>

Threshold Q_{out_1} is defined so that the radio link quality associated with DL-RS resources in the active set indicates a level at which receipt cannot be performed reliably. This threshold Q_{out_1} may be a radio link quality corresponding to an X₁% (for example, X₁=10%) BLER of a hypothetical PDCCH.

The user terminal receives information about the hypothetical PDCCH (also referred to as the "first hypothetical PDCCH information," the "first parameter set," etc.). This first hypothetical PDCCH information is reported to the user terminal by higher layer signaling and/or physical layer signaling (for example, DCI). The user terminal may control threshold Q_{out_1} based on the first hypothetical PDCCH information.

This first hypothetical PDCCH information may include, for example, at least one of information that shows a specific resource set (for example, the number of symbols in a specific CORESET), information that shows a specific aggregation level, information that shows a specific DCI format, information that shows the method of mapping PDCCH resources to the physical layer (information to show, for example, whether or not distributed interleaving is performed within a CORESET), information that shows the arrangement pattern of the DMRS for the hypothetical PDCCH, and information that shows a given BLER (X₁). Alternatively, this first hypothetical PDCCH may be a specific DCI format of a specific CORESET, configured by system information (Remaining Minimum System Information (RMSI) or System Information Block (SIB)). In this case, part of the higher layer signaling overhead for identifying the hypothetical PDCCH information can be reduced.

In addition, when QCL is assumed between the DMRS for a PDCCH and a CSI-RS resource, the above first hypothetical PDCCH information may include information about the relationship between the DMRS for the PDCCH and the CSI-RS (for example, information to show the ratio of the density of the DMRS for the PDCCH and the density of the CSI-RS, and/or the ratio of the energy per resource element (RE) of the PDCCH and the energy per RE of the CSI-RS). The user terminal may demodulate the PDCCH based on this information about the relationship.

In addition, when QCL is assumed between the DMRS for a PDCCH and an SS/PBCH block, the first hypothetical PDCCH information may include information about the relationship between the DMRS for the PDCCH and the SS/PBCH block (for example, information to show the ratio between the energy per RE of the PDCCH and the energy per RE of a signal in the SS/PBCH block). Here, the signal in the SS/PBCH block is the PSS, the SSS or the DMRS for the PBCH. The user terminal may demodulate the PDCCH based on this QCL information.

### <Threshold Q_{in_1}>

Threshold Q_{in_1} is defined so that the radio link quality associated with DL-RS resources in the active set indicates a level at which receipt can be performed significantly more reliably than at the level indicated by threshold Q_{out_1}. This threshold Q_{in_1} may be a radio link quality corresponding to a Y₁% (for example, Yi=2%) BLER of a hypothetical PDCCH.

The user terminal receives information about the hypothetical PDCCH (also referred to as "second hypothetical PDCCH information," "second parameter set," etc.). This second hypothetical PDCCH information is reported to the user terminal by higher layer signaling and/or physical layer signaling (for example, DCI). The user terminal may control threshold Q_{in_1} based on the second hypothetical PDCCH information.

This second hypothetical PDCCH information may include, for example, at least one of information that shows a specific resource set (for example, the number of symbols in a specific CORESET), information that shows the method of mapping PDCCH resources to the physical layer (information to show, for example, whether or not distributed interleaving is performed within a CORESET), information that shows a specific aggregation level, information that shows a specific DCI format, information that shows the arrangement pattern of the DMRS for the hypothetical PDCCH, and information that shows a given BLER (Yi). Alternatively, the second hypothetical PDCCH may be a specific DCI format for a specific CORESET configured by RMSI or SIB. In this case, part of the higher layer signaling overhead for identifying hypothetical PDCCH information can be reduced.

In addition, when QCL is assumed between the DMRS for a PDCCH and a CSI-RS resource, the above second hypothetical PDCCH information may include information about the relationship between the DMRS for the PDCCH and the CSI-RS (for example, information to show the ratio of the density of the DMRS for the PDCCH and the density of the CSI-RS, and/or the ratio of the energy per RE of the PDCCH and the energy per RE of the CSI-RS). The user terminal may demodulate the PDCCH based on this information about the relationship.

In addition, when QCL is assumed between the DMRS for a PDCCH and an SS/PBCH block, the above second hypothetical PDCCH information may include information about the relationship between the DMRS for the PDCCH and the SS/PBCH block (for example, information to show the ratio between the energy per RE of the PDCCH and the energy per RE of a signal in the SS/PBCH block). Here, the signal in the SS/PBCH block is the PSS, the SSS or the DMRS for the PBCH. The user terminal may demodulate the PDCCH based on this QCL information.

### <Threshold Q_{out_2}>

Threshold Q_{out_2} is defined so that the radio link quality associated with DL-RS resources in the candidate set indicates a level at which receipt cannot be performed reliably. This threshold Q_{out_2} may be a radio link quality corresponding to an X₂% (for example, X₂=10%) BLER of a hypothetical PDCCH.

The user terminal receives information about the hypothetical PDCCH (also referred to as "third hypothetical PDCCH information," "third parameter set," etc.). This third hypothetical PDCCH information is reported to the user terminal by higher layer signaling and/or physical layer signaling (for example, DCI). The user terminal may control threshold Q_{out_2} based on the third hypothetical PDCCH information.

This third hypothetical PDCCH information may include, for example, at least one of information that shows a specific resource set (for example, the number of symbols in a specific CORESET), information that shows a specific aggregation level, information that shows a specific DCI format, information that shows the method of mapping PDCCH resources to the physical layer (information to show, for example, whether or not distributed interleaving is performed within a CORESET), information that shows the arrangement pattern of the DMRS for the hypothetical PDCCH, and information that shows a given BLER (X₂). Alternatively, the third hypothetical PDCCH may be a specific DCI format for a specific CORESET configured by RMSI or SIB. In this case, part of the higher layer signaling overhead for identifying hypothetical PDCCH information can be reduced.

In addition, when the radio link quality of a CSI-RS is measured as a DL-RS resource of the candidate set, the above third hypothetical PDCCH information may include information about the relationship between the DMRS for the PDCCH and the CSI-RS (for example, information to show the ratio of the density of the DMRS for the PDCCH and the density of the CSI-RS, and/or the ratio of the energy per RE of the PDCCH and the energy per RE of the CSI-RS).

In addition, when a signal in the SS/PBCH block is measured as a DL-RS resource of the candidate set, the above third hypothetical PDCCH information may include information about the relationship between the DMRS for the PDCCH and the SS/PBCH block (for example, information to show the ratio between the energy per RE of the PDCCH and the energy per RE of a signal in the SS/PBCH block). Here, the signal in the SS/PBCH block is the PSS, the SSS or the DMRS for the PBCH.

### <Threshold Q_{in_2}>

Threshold Q_{in_2} is defined so that the radio link quality associated with DL-RS resources in the active set indicates a level at which receipt can be performed significantly more reliably than at the level indicated by threshold Q_{out_2}. This threshold Q_{in_2} may be a radio link quality corresponding to an Y₂% (for example, Y₂=2%) BLER of a hypothetical PDCCH.

The user terminal receives information about the hypothetical PDCCH (also referred to as "fourth hypothetical PDCCH information," "third parameter set," etc.). This fourth hypothetical PDCCH information is reported to the user terminal by higher layer signaling and/or physical layer signaling (for example, DCI). The user terminal may control threshold Q_{in_2} based on the third hypothetical PDCCH information.

This fourth hypothetical PDCCH information may include, for example, at least one of information that shows a specific resource set (for example, the number of symbols in a specific CORESET), information that shows the method of mapping PDCCH resources to the physical layer (information to show, for example, whether or not distributed interleaving is performed within a CORESET), information that shows a specific aggregation level, information that shows a specific DCI format, information that shows the arrangement pattern of the DMRS for the hypothetical PDCCH, and information that shows a given BLER (X₂). Alternatively, the fourth hypothetical PDCCH may be a specific DCI format for a specific CORESET configured by RMSI or SIB. In this case, part of the higher layer signaling overhead for identifying hypothetical PDCCH information can be reduced.

In addition, when the radio link quality of a CSI-RS is measured as a DL-RS resource of the candidate set, the above fourth hypothetical PDCCH information may include information about the relationship between the DMRS for the PDCCH and the CSI-RS (for example, information to show the ratio of the density of the DMRS for the PDCCH and the density of the CSI-RS, and/or the ratio of the energy per RE of the PDCCH and the energy per RE of the CSI-RS).

In addition, when a signal in the SS/PBCH block is measured as a DL-RS resource of the candidate set, the above fourth hypothetical PDCCH information may include information about the relationship between the DMRS for the PDCCH and the SS/PBCH block (for example, information to show the ratio between the energy per RE of the PDCCH and the energy per RE of a signal in the SS/PBCH block). Here, the signal in the SS/PBCH block is the PSS, the SSS or the DMRS for the PBCH.

According to the first example, thresholds Q_{out_1} and Q_{in_1}, which are used in the RLM for the active set and thresholds Q_{out_2} and Q_{in_2}, which are used in the RLM for the candidate set, are provided separately, and the first to fourth hypothetical PDCCH information for use for controlling each threshold is reported from the radio base station. As a result, the RLM for the active set and the RLM for the candidate set can be controlled properly.

Note that the first to fourth hypothetical PDCCH information may be all different, or may be common. When the first to fourth hypothetical PDCCH information are common, the user terminal identifies the first to fourth hypothetical PDCCH information based on one parameter set, and checks whether or not each threshold is fulfilled. In this case, the overhead of higher layer signaling can be reduced.

### (Second Example)

With a second example of the present disclosure, detection of beam failures and detection of new candidate beams based on RLM in the active set and/or the candidate set will be described.

### <Beam Failure Detection>

The user terminal may control the detection of beam failures based on at least one of above threshold Q_{out_1}, the radio link quality of one or more DL-RS resources in the active set (first set), and the radio link quality of DL-RS resources in the candidate set (second set).

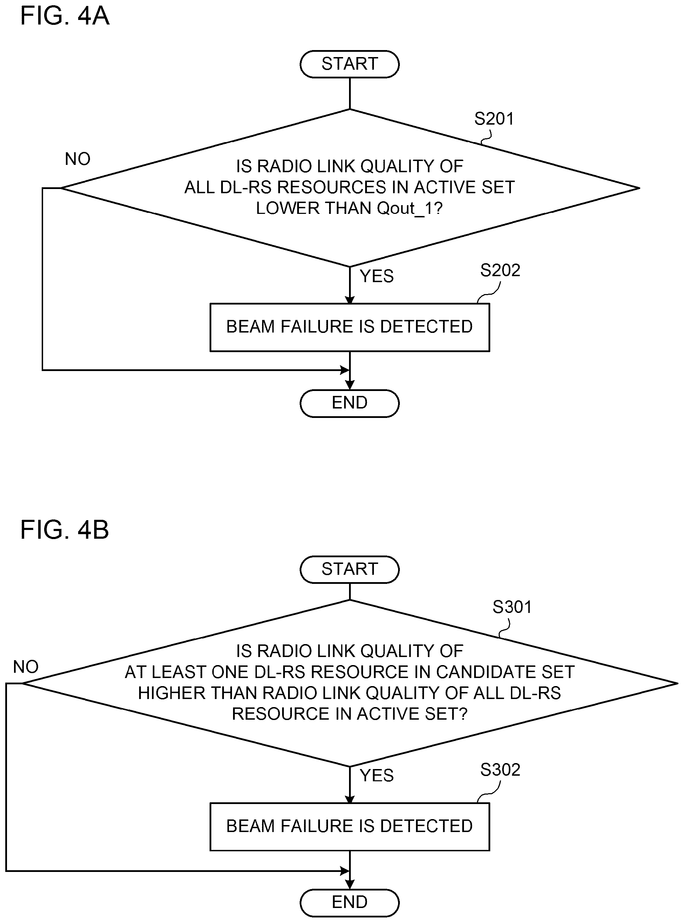

FIGs. 4 are flowcharts to show examples of beam failure detection according to the second example. As shown in FIG. 4A, when the radio link quality associated with all of the DL-RS resources in the active set is lower than threshold Q_{out_1} (step S201: Yes), the user terminal may detect a beam failure (step S202).

For example, referring to FIG. 3, when the radio link quality corresponding to the BLER of a hypothetical PDCCH that is transmitted in beams B11 to B13 is lower than threshold Q_{out_1}, a beam failure is detected.

Alternatively, as shown in FIG. 4B, when the radio link quality associated with at least one DL-RS resource in the candidate set is higher than the radio link quality associated with all of the DL-RS resources in the active set (step S301: Yes), a beam failure may be detected (step 302).

For example, referring to FIG. 3, when at least one radio link quality corresponding to the BLER of a hypothetical PDCCH transmitted in beams B21 to B23 is higher than the radio link quality corresponding to the BLER of a hypothetical PDCCH transmitted in beams B11 to B13, a beam failure is detected.

### <Detection of New Candidate Beam>

The user terminal may control the detection of new candidate beams based on at least one of above threshold Q_{in_2}, the radio link quality of DL-RS resources in the active set, and the radio link quality of DL-RS resources in the candidate set.

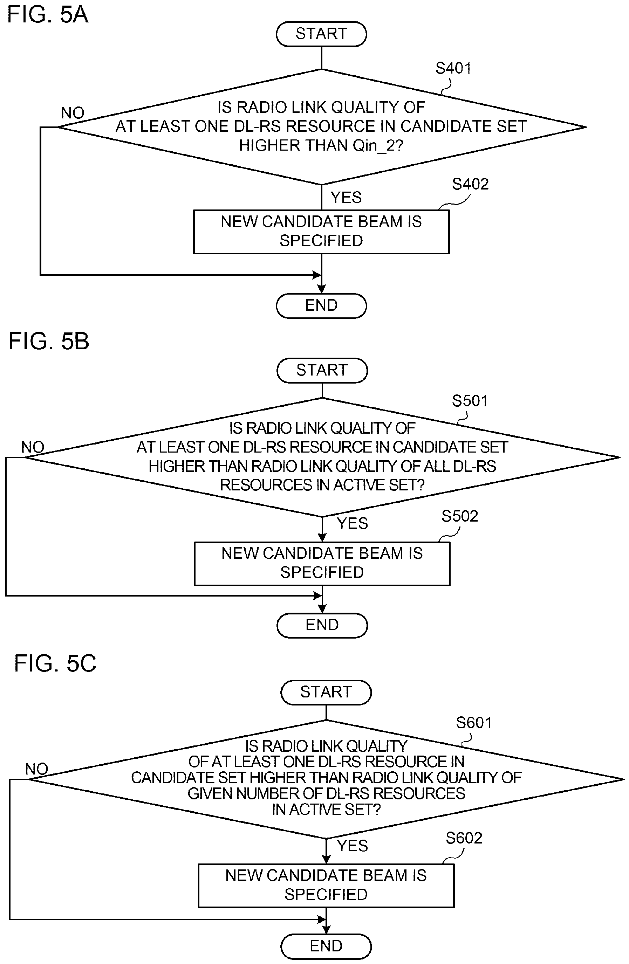

FIGs. 5 are flowcharts to show examples of new candidate beam detection according to the second example. As shown in FIG. 5A, when the radio link quality associated with at least one DL-RS resource in the candidate set is higher than threshold Q_{in_2}, (step S401: Yes) the user terminal may detect the beam corresponding to that DL-RS resource as a new candidate beam (step S402).

For example, referring to FIG. 3, when the radio link quality corresponding to the BLER of a hypothetical PDCCH transmitted in at least one of beams B21 to B23 is higher than threshold Q_{in_2}, this beam is detected as a new candidate beam.

Alternatively, as shown in FIG. 5B, when the radio link quality associated with at least one DL-RS resource in the candidate set is higher than the radio link quality associated with all of the DL-RS resources in the active set (step S501: Yes), a beam failure may be detected (step 502).

For example, referring to FIG. 3, when the radio link quality corresponding to the BLER of a hypothetical PDCCH transmitted in at least one of beams B21 to B23 is higher than the radio link quality corresponding to the BLER of a hypothetical PDCCH transmitted in beams B11 to B13, the beam of the higher radio link quality is detected as a new candidate beam.

Alternatively, as shown in FIG. 5B, when the radio link quality associated with at least one DL-RS resource in the candidate set is higher than the radio link quality associated with a given number of DL-RS resources in the active set (step S601: Yes), a beam failure may be detected (step 602).

For example, referring to FIG. 3, when the radio link quality corresponding to the BLER of a hypothetical PDCCH transmitted in at least one of beams B21 to B23 is higher than the radio link quality corresponding to the BLER of a hypothetical PDCCH transmitted in a given number of beams among beams B11 to B13, the beam of the higher radio link quality is detected as a new candidate beam.

According to the second example, beam failures and new candidate beams can be detected properly based on the RLM for the active set and/or the candidate set.

### (Other Examples)

With the first example, the first to fourth hypothetical PDCCH information for use for controlling each of thresholds Q_{out_1} and Q_{in_1}, which are used in the RLM for the active set, and thresholds Q_{out_2} and Q_{in_2}, which are used in the RLM for the candidate set, have been described. With the first example, hypothetical PDCCH information is specified for each threshold, but the hypothetical PDCCH information may be specified for each type of DL-RS resource (for example, CSI-RS resource or SS/PBCH block).

For example, if a user terminal is configured to access the radio link quality of a hypothetical PDCCH based on a CSI-RS, the user terminal may presume information about the PDCCH associated with the CSI-RS.

Also, if a user terminal is configured to access the radio link quality of a hypothetical PDCCH based on a SS/PBCH block, the user terminal may presume information about the PDCCH associated with the SS/PBCH block.

Moreover, when the DMRS for a PDCCH and a CSI-RS are assumed to be quasi-co-located (in QCL), the user terminal may presume information about the PDCCH associated with the CSI-RS.

Furthermore, when the DMRS for a PDCCH and a SS/PBCH block are assumed to be quasi-co-located (in QCL), the user terminal may presume information about the PDCCH associated with the SS/PBCH block.

### (Radio Communication System)

Now, the structure of a radio communication system according to the present embodiment will be described below. In this radio communication system, communication is performed using at least one of the above examples or a combination of them.

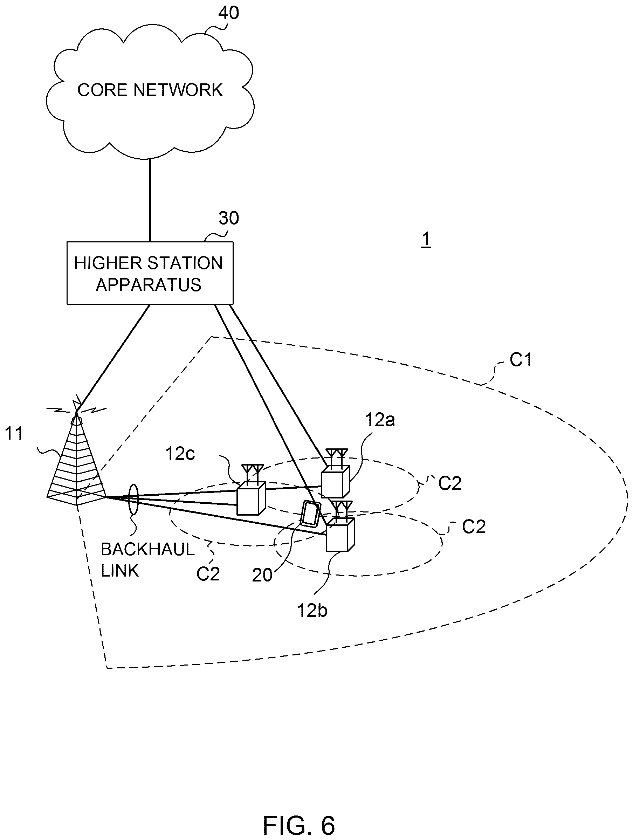

FIG. 6 is a diagram to show an exemplary schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "Long-term evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "New Radio (NR)," "Future Radio Access (FRA)," "New-RAT (Radio Access Technology)," and so on, or may be seen as a system to implement these.

The radio communication system 1 includes a radio base station 11 that forms a macro cell C1, with a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 and so forth are not limited to those illustrated in the drawings.

The user terminals 20 can connect with both the radio base station 11 and the radio base stations 12. The user terminals 20 might use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

A numerology may refer to a communication parameter that is applied to transmission and/or receipt of a given signal and/or channel, and represent at least one of the subcarrier spacing, the bandwidth, the duration of symbols, the length of cyclic prefixes, the duration of subframes, the length of TTIs, the number of symbols per TTI, the radio frame configuration, the filtering process, the windowing process, and so on.

The radio base station 11 and a radio base station 12 (or two radio base stations 12) may be connected with each other by cables (for example, by optical fiber, which is in compliance with the Common Public Radio Interface (CPRI), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but these are by no means limiting. Also, each radio base station 12 may be connected with the higher station apparatus 30 via the radio base station 11.

Note that the radio base station 11 is a radio base station having a relatively wide coverage, and may be referred to as a "macro base station," a "central node," an "eNodeB (eNB)," a "transmitting/receiving point" and so on. Also, the radio base stations 12 are radio base stations each having a local coverage, and may be referred to as "small base stations," "micro base stations," "pico base stations," "femto base stations," "Home eNodeBs (HeNBs)," "Remote Radio Heads (RRHs)," "transmitting/receiving points" and so on. Hereinafter, the radio base stations 11 and 12 will be collectively referred to as "radio base stations 10," unless specified otherwise.

The user terminals 20 are terminals that support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands that are each formed with one or contiguous resource blocks, per terminal, and allowing a plurality of terminals to use mutually different bands. Note that the uplink and downlink radio access schemes are not limited to the combinations of these, and other radio access schemes may be used as well.

In the radio communication system 1, a downlink shared channel (Physical Downlink Shared CHannel (PDSCH)), which is used by each user terminal 20 on a shared basis, a broadcast channel (Physical Broadcast CHannel (PBCH)), downlink L1/L2 control channels and so on are used as downlink channels. User data, higher layer control information, System Information Blocks (SIBs) and so on are communicated in the PDSCH. Also, the Master Information Blocks (MIB) is communicated in the PBCH.

The L1/L2 control channels include at least one of DL control channels (such as a Physical Downlink Control CHannel (PDCCH) and/or an Enhanced Physical Downlink Control CHannel (EPDCCH)), a Physical Control Format Indicator CHannel (PCFICH), and a Physical Hybrid-ARQ Indicator CHannel (PHICH). Downlink control information (DCI), which includes PDSCH and/or PUSCH scheduling information and so on, is communicated by the PDCCH.

Note that scheduling information may be reported in DCI. For example, the DCI to schedule receipt of DL data may be referred to as "DL assignment," and the DCI to schedule transmission of UL data may also be referred to as "UL grant."

The number of OFDM symbols to use for the PDCCH is communicated by the PCFICH. Hybrid Automatic Repeat reQuest (HARQ) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (Physical Uplink Shared CHannel (PUSCH)), which is used by each user terminal 20 on a shared basis, an uplink control channel (Physical Uplink Control CHannel (PUCCH)), a random access channel (Physical Random Access CHannel (PRACH)) and so on are used as uplink channels. User data, higher layer control information and so on are communicated by the PUSCH. Also, in the PUCCH, downlink radio quality information (Channel Quality Indicator (CQI)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (Sounding Reference Signals (SRSs)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

### (Radio Base Station)

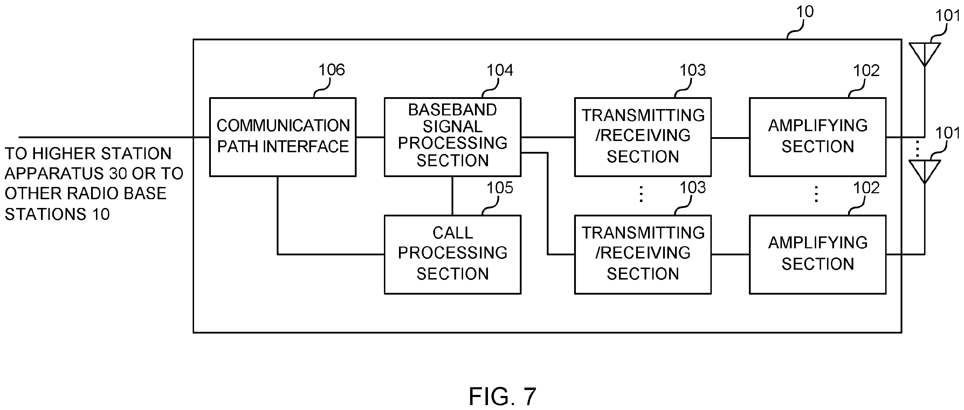

FIG. 7 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30, to the baseband signal processing section 104, via the communication path interface 106.

In the baseband signal processing section 104, the user data is subjected to transmission processes, including a Packet Data Convergence Protocol (PDCP) layer process, user data division and coupling, Radio Link Control (RLC) layer transmission processes such as RLC retransmission control, Medium Access Control (MAC) retransmission control (for example, an Hybrid Automatic Repeat reQuest (HARQ) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base station 10, and manages the radio resources.

The communication path interface section 106 transmits and receives signals to and from the higher station apparatus 30 via a given interface. Also, the communication path interface 106 may transmit and receive signals (backhaul signaling) with other radio base stations 10 via an inter-base station interface (which is, for example, optical fiber that is in compliance with the Common Public Radio Interface (CPRI), the X2 interface, etc.).

Note that the transmitting/receiving sections 103 may furthermore have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 101 may be constituted by, for example, array antennas. In addition, the transmitting/receiving sections 103 are designed so that single-BF or multiple-BF operations can be used.

The transmitting/receiving sections 103 may transmit signals by using transmitting beams, or receive signals by using receiving beams. Transmitting/receiving sections 103 may transmit and/or receive signals by using given beams determined by control section 301.

The transmitting/receiving sections 103 may receive various pieces of information described in each of the examples above, from the user terminal 20, or transmit these to the user terminal 20. For example, the transmitting/receiving sections 103 transmit at least one of the first to fourth hypothetical PDCCH information, information to show the configuration of DL-RS resources for measurement (for example, CSI-RS resources and/or SS/PBCH blocks), and information to show associations between DMRS ports and CSI-RSs.

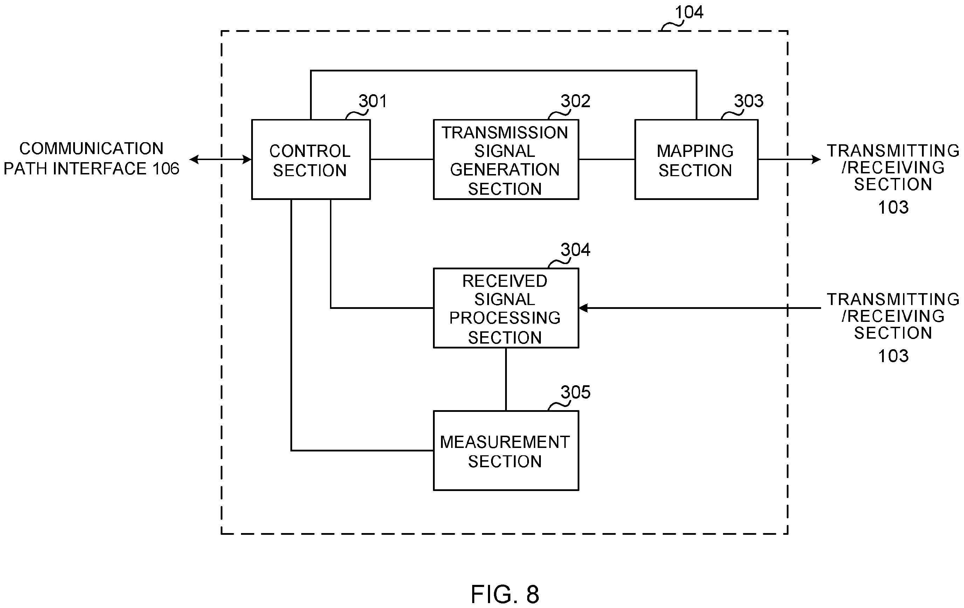

FIG. 8 is a diagram to show an exemplary functional structure of a radio base station according to the present embodiment. Note that, although this example primarily shows functional blocks that pertain to characteristic parts of the present embodiment, the radio base station 10 might have other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals, and so on based on the results of deciding whether or not retransmission control is necessary for uplink data signals, and so on.

The control section 301 controls scheduling of synchronization signals (for example, PSS/SSS), downlink reference signals (for example, CRS, CSI-RS, DMRS, etc.) and the like.

The control section 301 may exert control so that transmitting beams and/or receiving beams are formed by using digital BF (for example, precoding) in the baseband signal processing section 104 and/or analog BF (for example, phase rotation) in the transmitting/receiving sections 103.

The control section 301 may control radio link monitoring (RLM) and/or beam recovery (BR) for the user terminal 20.

To be more specific, the control section 301 controls the generation and/or transmission of information about a hypothetical PDCCH (downlink control channel) (hypothetical PDCCH information) (first example). The hypothetical PDCCH information may include at least one of information to show a specific set of control resources, information to show a specific aggregation level, information to show the format of downlink control information, information to show the pattern of the demodulation reference signal, and information to show a given block error rate.

The transmission signal generation section 302 generates downlink signals (downlink control signals, downlink data signals, downlink reference signals, and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates, modulation schemes and the like that are determined based on, for example, channel state information (CSI) from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). The received signal processing section 304 can be constituted by a signal processor, a signal processing circuit or signal processing apparatus that can be described based on general understanding of the technical field to which the present invention pertains.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform Radio Resource Management (RRM) measurements, Channel State Information (CSI) measurements, and so on, based on the received signals. The measurement section 305 may measure the received power (for example, Reference Signal Received Power (RSRP)), the received quality (for example, Reference Signal Received Quality (RSRQ), Signal to Interference plus Noise Ratio (SINR), Signal to Noise Ratio (SNR), etc.), the signal strength (for example, Received Signal Strength Indicator (RSSI)), transmission path information (for example, CSI) and so on. The measurement results may be output to the control section 301.

### (User Terminal)

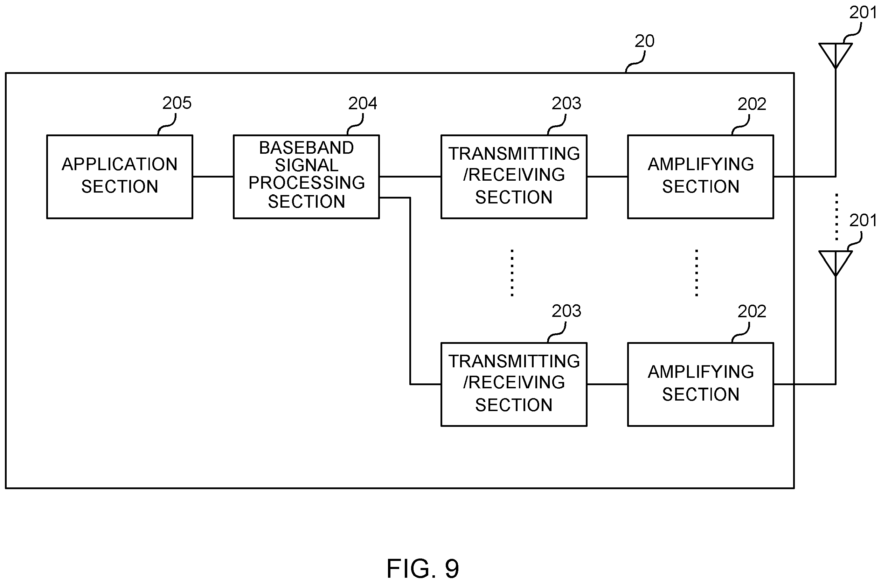

FIG. 9 is a diagram to show an exemplary overall structure of a user terminal according to the present embodiment. A user terminal 20 has a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process, and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203.

Baseband signals that are output from the baseband signal processing section 204 are converted into a radio frequency band in the transmitting/receiving sections 203, and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may further have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 201 may be constituted by, for example, array antennas. In addition, the transmitting/receiving sections 203 are structured so that single-BF and multiple-BF can be used.

The transmitting/receiving sections 203 may transmit signals by using transmitting beams, or receive signals by using receiving beams. The transmitting/receiving sections 203 may transmit and/or receive signals by using given beams selected by the control section 401.

The transmitting/receiving sections 203 may receive various pieces of information described in each of the examples above, from the radio base station 10, and/or transmit these to the radio base station 10. For example, the transmitting/receiving sections 203 may transmit at least one of the first to fourth hypothetical PDCCH information, information to show the configuration of DL-RS resources for measurement (for example, CSI-RS resources and/or SS/PBCH blocks), and information to show associations between DMRS ports and CSI-RSs.

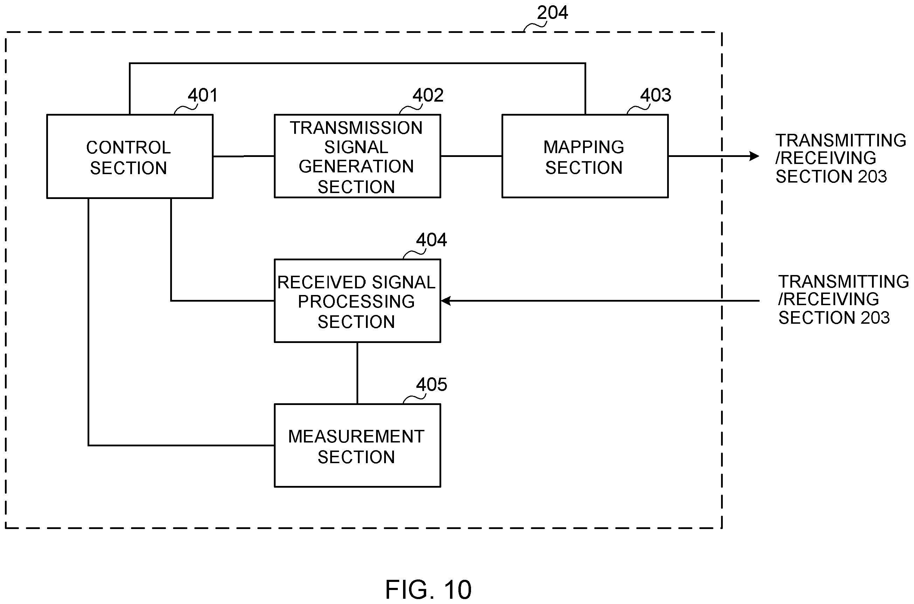

FIG. 10 is a diagram to show an exemplary functional structure of a user terminal according to the present embodiment. Note that, although this example primarily shows functional blocks that pertain to characteristic parts of present embodiment, the user terminal 20 might have other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations have only to be included in the user terminal 20, and some or all of these configurations may not be included in the baseband signal processing section 204.

The control section 401 controls the whole of the user terminal 20. The control section 401 can be constituted by a controller, a control circuit or control apparatus that can be described based on general understanding of the technical field to which the present invention pertains.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on results of deciding whether or not retransmission control is necessary for the downlink control signals and/or downlink data signals, and so on.

The control section 401 may exert control so that transmitting beams and/or receiving beams are formed by using digital BF (for example, precoding) in the baseband signal processing section 204 and/or by using analog BF (for example, phase rotation) in the transmitting/receiving sections 203.

The control section 401 may control radio link monitoring (RLM) and/or beam recovery (BR) based on measurement results in the measurement section 405.

The control section 401 may control the monitoring (RLM) of the radio link quality of a first set (active set) of downlink signals that are assumed to be quasi-co-located with the DMRS for a PDCCH, and/or the radio link quality of a second set (candidate set) of downlink signals configured by the radio base station 10, based on hypothetical PDCCH information reported from the radio base station 10. These downlink signals may be CSI-RSs (resources) and/or SS/PBCH blocks.

The control section 401 may determine a first threshold Q_{out_1} and/or a second threshold Q_{in_1}, which correspond to given block error rates of the hypothetical downlink control channel, based on the hypothetical PDCCH information (first example).

The control section 401 may determine a third threshold Q_{out_2} and/or a fourth threshold Q_{in_2}, which correspond to given block error rates of the hypothetical downlink control channel, based on the hypothetical PDCCH information (first example).

The control section 401 may control beam failure detection based on at least one of first threshold Q_{out_1}, the radio link quality of downlink signals in the first set, and the radio link quality of downlink signals in the second set (second example and FIGs. 4).

The control section 401 may control new candidate beam detection based on at least one of above third threshold Q_{in_2}, the radio link quality of downlink signals in the first set, and the radio link quality of downlink signals in the second set (second example and FIGs. 5).

In addition, when various pieces of information reported from the radio base station 10 are acquired from the received signal processing section 404, the control section 401 may update the parameters used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or signal generation apparatus that can be described based on general understanding of the technical field to which the present invention pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) for received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI), and so on. The measurement results may be output to the control section 401.

### (Hardware Structure)

Note that the block diagrams that have been used to describe the present embodiment show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically-separate pieces of apparatus (by using cables and/or radio, for example) and using these multiple pieces of apparatus.

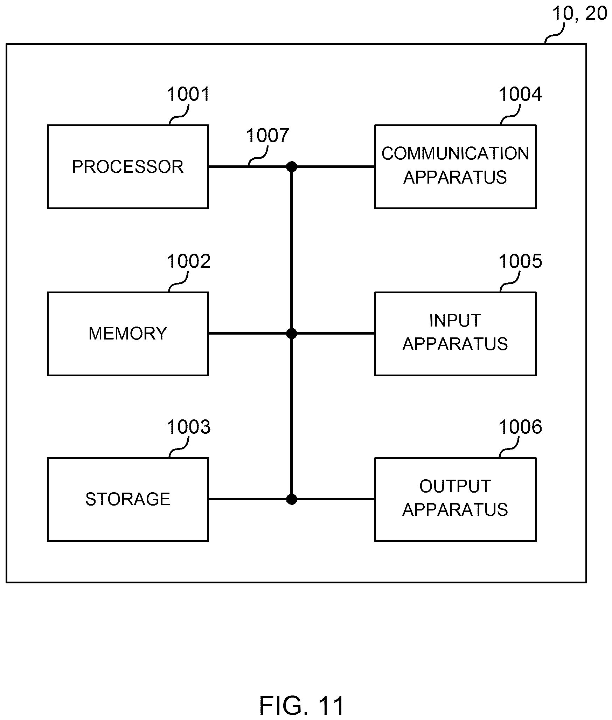

For example, the radio base station, user terminals, and so on according to the present embodiment may function as a computer that executes the processes of each example of the present embodiment. FIG. 11 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, a bus 1007 and so on.

Note that, in the following description, the term "apparatus" may be replaced by "circuit," "device," "unit" and so on. Note that, the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented simultaneously or in sequence, or by using different techniques, on one or more processors. Note that the processor 1001 may be implemented with one or more chips.

The functions of the radio base station 10 and the user terminal 20 are implemented by, for example, allowing hardware such as the processor 1001 and the memory 1002 to read given software (programs), and allowing the processor 1001 to do calculations, control communication that involves the communication apparatus 1004, control the reading and/or writing of data in the memory 1002 and the storage 1003, and so on.

The processor 1001 may control the whole computer by, for example, running an operating system. The processor 1001 may be constituted by a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)," and so on. The memory 1002 can store executable programs (program codes), software modules, and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (Compact Disc ROM (CD-ROM) or the like), a digital versatile disc, a Blu-ray (registered trademark) disk, etc.), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using cable and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer and so on, in order to implement, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from outside (for example, a keyboard, a mouse, a microphone, a switch, a button, a sensor and so on). The output apparatus 1006 is an output device for allowing sending output to outside (for example, a display, a speaker, an Light Emitting Diode (LED) lamp, and so on). Note that the input apparatus 1005 and the output apparatus 1006 may be provided in an integrated structure (for example, a touch panel).

Furthermore, these pieces of apparatus, including the processor 1001, the memory 1002 and so on, are connected by the bus 1007, so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an Application-Specific Integrated Circuit (ASIC), a Programmable Logic Device (PLD), an Field Programmable Gate Array (FPGA) and so on, and part or all of the functional blocks may be implemented by these pieces of hardware. For example, the processor 1001 may be implemented with at least one of these pieces of hardware.

### (Variations)

Note that, the terminology used in this specification and the terminology that is needed to understand this specification may be replaced by other terms that communicate the same or similar meanings. For example, a "channel" and/or a "symbol" may be replaced by a "signal" (or "signaling"). Also, a "signal" may be a "message." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency," and so on.

Furthermore, a radio frame may be comprised of one or more periods (frames) in the time domain. One or more periods (frames) that constitute a radio frame may be each referred to as a "subframe." Furthermore, a subframe may be comprised of one or multiple slots in the time domain. A subframe may be a fixed time duration (for example, 1 ms), which does not depend on numerology.

Furthermore, a slot may be comprised of one or more symbols in the time domain (Orthogonal Frequency Division Multiplexing (OFDM) symbols, Single Carrier Frequency Division Multiple Access (SC-FDMA) symbols, and so on). Also, a slot may be a time unit based on numerology. Also, a slot may include a plurality of minislots. Each minislot may be comprised of one or more symbols in the time domain. Also, a minislot may be referred to as a "subslot."

A radio frame, a subframe, a slot, a minislot, and a symbol all refer to a unit of time in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or one minislot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "minislot" and so on, instead of a "subframe."

Here, a TTI refers to the minimum time unit for scheduling in radio communication, for example. For example, in LTE systems, a radio base station schedules the radio resources (such as the frequency bandwidth and transmission power each user terminal can use) to allocate to each user terminal in TTI units. Note that the definition of TTIs is not limited to this.

A TTI may be the transmission time unit of channel-encoded data packets (transport blocks), code blocks and/or codewords, or may be the unit of processing in scheduling, link adaptation, and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit for scheduling may be controlled.

A TTI having a time length of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI (or a "fractional TTI")," a "shortened subframe," a "short subframe," a "minislot," a "sub-slot," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (Physical RB (PRB))," a "subcarrier group (SCG)," a "resource element group (REG)," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, minislots, symbols, and so on described above are simply examples. For example, configurations pertaining to the number of subframes included in a radio frame, the number of slots included in a subframe or a radio frame, the number of minislots included in a slot, the number of symbols and RBs included in a slot or a minislot, the number of subcarriers included in an RB, the number of symbols in a TTI, the symbol duration, the length of cyclic prefixes (CPs), and so on can be variously changed.

Also, the information and parameters described in this specification may be represented in absolute values or in relative values with respect to given values, or may be represented using other applicable information. For example, a radio resource may be specified by a given index.

The names used for parameters and so on in this specification are in no respect limiting. For example, since various channels (Physical Uplink Control CHannel (PUCCH), Physical Downlink Control CHannel (PDCCH) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and so on that are output may be deleted. The information, signals, and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, Radio Resource Control (RRC) signaling, broadcast information (the master information block (MIB), system information blocks (SIBs) and so on), Medium Access Control (MAC) signaling, etc.), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as "RRC messages," and can be, for example, an "RRC connection setup message," "RRC connection reconfiguration message," and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent in an implicit way (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on), and/or wireless technologies (infrared radiation, microwaves, and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell," and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part or all of the coverage area of a base station and/or a base station subsystem that provides communication services within this coverage.

As used herein, the terms "mobile station (MS)," "user terminal," "user equipment (UE)," and "terminal" may be used interchangeably.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

Furthermore, the radio base stations in this specification may be interpreted as user terminals. For example, the examples/embodiments of the present disclosure may be applied to a configuration in which communication between a radio base station and a user terminal is replaced with communication among a plurality of user terminals (Device-to-Device (D2D)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, Mobility Management Entities (MMEs), Serving-Gateways (S-GWs), and so on may be possible, but these are not limiting) other than base stations, or combinations of these.

The examples/embodiments illustrated in this specification may be used individually or in combinations, which may be switched depending on the mode of implementation. The order of processes, sequences, flowcharts, and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use Long-term evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), other adequate radio communication methods, and/or next-generation systems that are enhanced based on these.

The phrase "based on" as used in this specification does not mean "based only on" unless otherwise specified. In other words, the phrase "based on" means both "based only on" and "based at least on."

Reference to elements with designations such as "first," "second," and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database, or some other data structure), ascertaining, and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used herein, when two elements are connected, these elements may be considered "connected" or "coupled" to each other by using one or more electrical wires, cables, and/or printed electrical connections, and, as a number of nonlimiting and non-inclusive examples, by using electromagnetic energy having wavelengths of the radio frequency region, the microwave region and/or the optical region (both visible and invisible).

In the present specification, the phrase "A and B are different" may mean "A and B are different from each other." The terms such as "leave," "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a receiving section that receives information about a hypothetical downlink control channel; and
a control section that controls, based on the information, monitoring of radio link quality of a downlink signal in a first set, which is assumed to be quasi-co-located (in QCL) with a demodulation reference signal for a downlink control channel, and/or radio link quality of a downlink signal in a second set, which is configured by a radio base station.

2. The user terminal according to claim 1, wherein the control section determines a first threshold and/or a second threshold, which correspond to given block error rates of the hypothetical downlink control channel, based on the information, and controls beam failure detection based on at least one of the first threshold, the radio link quality of the downlink signal in the first set, and the radio link quality of the downlink signal in the second set.

3. The user terminal according to claim 1 or claim 2, wherein the control section determines, based on the information, a third threshold and/or a fourth threshold, which correspond to given block error rates of the hypothetical downlink control channel, and controls detection of a new candidate beam based on at least one of the fourth threshold, the radio link quality of the downlink signal in the first set, and the radio link quality of the downlink signal in the second set.

4. The user terminal according to one of claim 1 to claim 3, wherein the information includes at least one of information that shows a specific set of control resources, information that shows a specific aggregation level, information that shows a format of downlink control information, information that shows a pattern of the demodulation reference signal, and information that shows the given block error rates.

5. The user terminal according to one of claim 1 to claim 3, wherein the DL signal comprises a reference signal for measuring channel state information and/or at least one of a primary synchronization signalgiven, a secondary synchronization signal and a demodulation reference signal for the broadcast channel in a given signal block.

6. A radio communication method comprising, in a user terminal, the steps of:
receiving information about a hypothetical downlink control channel; and
controlling, based on the information, monitoring of radio link quality about a downlink signal in a first set, which is assumed to be quasi-co-located (in QCL) with a demodulation reference signal for a downlink control channel, and/or a downlink signal in a second set, which is configured by a radio base station.
